# FASCICULE DE BREVET EUROPEEN

(11) **EP 2 069 601 B1**
(45) Date de publication et mention de la délivrance du brevet: **05.12.2012**
(21) Numéro de dépôt: 07858493.5
(22) Date de dépôt: 02.10.2007
(51) Int. Cl.: G01S 13/04, G01S 13/87, E05F 15/00

(54) **DISPOSITIF DE DÉTECTION D'UN OBSTACLE A L'ARRIÈRE D'UN VÉHICULE**
VORRICHTUNG ZUR ERFASSUNG EINES HINDERNISSES HINTER EINEM FAHRZEUG
DEVICE FOR DETECTING AN OBSTACLE AT THE REAR OF A VEHICLE

(30) Priorité: 04.10.2006 FR 0608691
(43) Date de publication de la demande: 17.06.2009
(73) Titulaire: Renault S.A.S., 92100 Boulogne-Billancourt (FR)
(72) Inventeur: NGUYEN, Hoang-Giang, F-91130 Ris Orangis (FR); SANZ, Dominique, F-78470 Saint Remy Les Chevreuse (FR); SEYRANIAN, Chaene, F-78920 Ecquevilly (FR); BESSE, Patrick, F-92100 Boulogne Billancourt (FR); LESIEWIEZ, Guillaume, F-78190 Trappes (FR); CHALE GONGORA, Hugo Guillermo, F-78190 Chatillon (FR)
(86) Numéro de dépôt international: PCT/FR2007/052060
(87) Numéro de publication internationale: WO 2008/040910

(56) Documents cités:
- EP-A- 0 575 814
- EP-A- 1 564 358
- GB-A- 2 312 992
- US-A1- 2002 074 959
- US-A1- 2004 040 771

## Description

L'invention concerne un dispositif et un procédé de détection d'un obstacle situé à proximité d'un véhicule.

L'invention concerne plus précisément un dispositif et un procédé de détection d'un obstacle se trouvant à l'arrière d'un véhicule, lorsque la porte de coffre arrière, actionnée par des moyens motorisés, est à l'état ouvert.

L'invention s'applique en particulier, mais non limitativement, dans le cas où l'obstacle est une personne, en particulier les bras chargés.

On connaît des dispositifs et des procédés pour détecter la présence d'une personne située à proximité d'un véhicule et plus précisément sur la trajectoire d'un ouvrant motorisé.

Le document US 6 411 054 (D1) présente par exemple un dispositif comprenant une pluralité de capteurs disposés les uns à côté des autres le long de pièces arrière de véhicule (pare-choc, montants verticaux arrières), visant à détecter la présence d'une personne à l'arrière du véhicule.

Dans le document D1, les capteurs émettent un diagramme de rayonnement symétrique, les axes de symétrie de ces diagrammes étant orientés selon une même direction, en l'occurrence sensiblement perpendiculaire à la porte de coffre lorsque celle-ci est à l'état fermé.

Pour couvrir une zone de détection représentant l'arrière du véhicule, il est alors nécessaire avec ce type de dispositif de prévoir de nombreux capteurs, ce qui est onéreux.

Par ailleurs, ce dispositif, comme la plupart des dispositifs existants ne permet pas de connaître avec certitude la présence d'une personne, compte tenu du procédé employé.

Le document EP 1 564 358 A1 présente un dispositif comprenant une pluralité de capteurs définissant une zone de détection dont la profondeur est adaptée en fonction de l'état d'ouverture de la porte de coffre arrière.

Un objectif de l'invention est de proposer un dispositif dont la zone de détection couvre correctement l'arrière du véhicule, avec un nombre de capteurs réduit.

Il est ainsi prévu dans le cadre de l'invention un dispositif de détection d'un obstacle à l'arrière d'un véhicule selon la revendication 1.

Il est également prévu dans le cadre de l'invention un procédé de détection d'un obstacle à l'arrière d'un véhicule, selon la revendication 7.

D'autres caractéristiques, buts et avantages de la présente invention apparaîtront à la lecture de la description détaillée qui va suivre, et en regard des dessins annexés, donnés à titre d'exemples non lim itatifs et sur lesquels :
- la figure 1 illustre schématiquement, selon un premier mode de réalisation de l'invention, l'arrière d'un véhicule avec une porte de coffre à l'état ouvert, selon une vue de côté, le véhicule étant muni de capteurs pour lesquels sont représentés leurs diagrammes de rayonnement respectifs ;
- la figure 2 illustre schématiquement, selon une variante de réalisation de l'invention, l'arrière d'un véhicule avec une porte de coffre à l'état ouvert, selon une vue de côté, le véhicule étant muni de capteurs pour lesquels sont représentés leurs diagrammes de rayonnement respectifs ;
- la figure 3 illustre schématiquement, selon l'art antérieur, un diagramme de rayonnement d'un capteur ;
- la figure 4 illustre schématiquement en vue de dessus l'arrière du véhicule des figures 2 ou 3.

Le dispositif selon l'invention prévoit un bouton (non représenté) que l'utilisateur actionne pour demander la fermeture de la porte de coffre 1. Ce bouton est situé à l'intérieur du véhicule et est accessible aisément depuis l'arrière du véhicule 2 (porte de coffre ouverte), par une personne ayant notamment les bras chargés.

Lorsqu'une personne actionne le bouton, le procédé de fermeture de la porte est engagé. Dans ce procédé, la fermeture effective de la porte de coffre 1 ne commence qu'après un laps de temps prédéterminé et si l'utilisateur se situe hors de la zone de détection des capteurs 30, 31, 32.

Par ailleurs, une fois que l'utilisateur a quitté la zone de détection et si un obstacle, une personne (utilisateur ou autre), arrive par la suite dans la zone de détection des capteurs 30, 31, 32, le mouvement de fermeture de la porte de coffre 1 est stoppé.

La zone de détection des capteurs 30, 31, 32 est agencée pour qu'elle corresponde le plus possible au volume maximum défini par les dimensions de la porte de coffre (hauteur H, largeur L) et par une distance de détection verticale, lorsque la porte est à l'état ouvert.

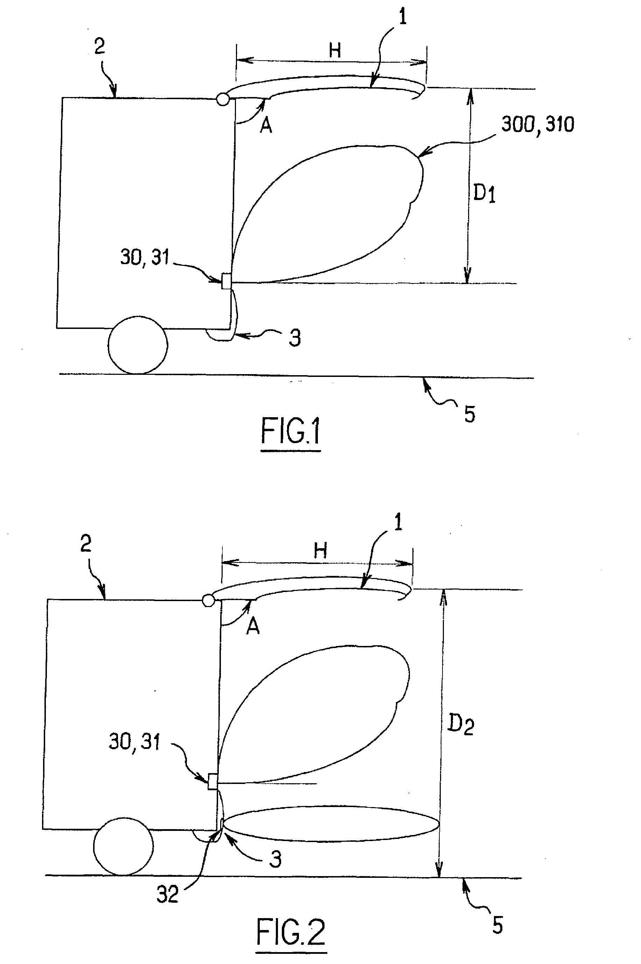

Dans un premier cas, la distance de détection verticale correspond à la distance D1 séparant, selon une direction verticale, les capteurs 30, 31 de la porte de coffre 1 (figure 1).

Dans une variante, pour laquelle on utilise également un radar de recul 32 généralement monté sur le pare-choc arrière 3 du véhicule (figure 2), la distance de détection verticale correspond à la distance D2 séparant le sol 5 de la porte de coffre 1.

Pour les applications prévues, on fournit ci-dessous à titre d'exemples non limitatifs quelques valeurs pour H, L, D1 et D2. La hauteur H est généralement comprise entre 1000 et 1500mm, de préférence voisine de 1250mm ; la distance D1 est également généralement comprise entre 1000mm et 1500mm, de préférence voisine de 1250mm, et la distance D2 est généralement comprise entre 1500 et 2200mm, de préférence voisine de 1800mm.

Ainsi, aucun obstacle non gênant pour la fermeture du coffre, c'est-à-dire ne se trouvant pas sur la trajectoire de la porte de coffre 1 lorsqu'elle se ferme, ne peut empêcher sa fermeture. On comprend que cette fermeture est effectuée par des moyens motorisés (non représentés).

Pour obtenir une telle zone de détection avec un nombre restreint de capteurs, il est ainsi prévu des moyens pour apodiser la distribution de l'intensité émise par le ou chaque capteur, afin de modifier le diagramme de rayonnement du ou de chaque capteur 30, 31.

Sur le plan mathématique, le diagramme de rayonnement en champ lointain est la transformée de Fourier de la fonction d'ouverture d'un capteur. Lorsqu'on effectue une transformée de Fourier d'une fonction d'ouverture, on obtient des lobes secondaires qui traduisent la nature de la fonction d'ouverture. Plus précisément, plus l'ouverture est « brusque », plus ces lobes secondaires sont importants. Ainsi, une fonction d'ouverture créneau sera plus « brusque » qu'une fonction d'ouverture sinus, elle-même plus « brusque » qu'une fonction d'ouverture linéaire.

Aussi, pour réduire voire supprimer les lobes secondaires, gênants en particulier pour les applications couvertes par l'invention, il faut alors lisser la fonction d'ouverture par une pondération de l'intensité émise. Cette opération de pondération ou loi de distribution de l'intensité émise s'appelle l'apodisation.

Par exemple, dans le cas d'un capteur ultrason, l'apodisation du diagramme de rayonnement d'un capteur consiste en la modification de la distribution des pressions acoustiques en chaque point de la surface émettrice du rayonnement.

Selon un autre exemple, dans le cas d'un capteur hyperfréquence, l'apodisation consiste à modifier l'intensité du courant en chaque point des éléments émetteurs.

Lorsqu'un ou plusieurs radars de recul 32 (figure 2) sont en outre prévus sur le véhicule, il peut également être envisagé ou non des moyens pour modifier leurs diagrammes de rayonnement respectifs, par les moyens d'apodisation présentés ci-dessus.

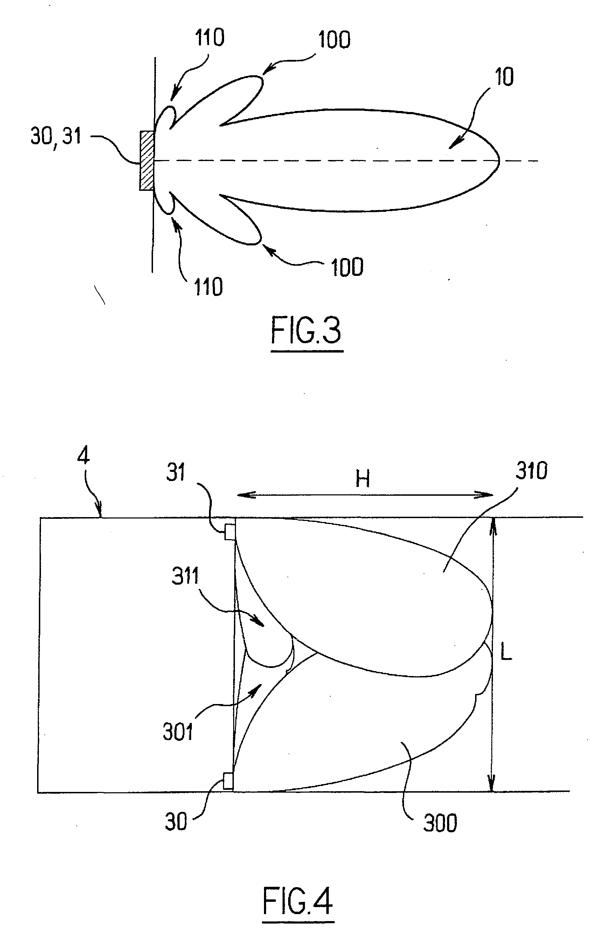

En effet, les capteurs 30, 31 sont des capteurs présentant normalement des diagrammes de rayonnement symétriques, avec un lobe principal 10 et des lobes secondaires 100, 110 (figure 3).

Pour couvrir la zone de détection décrite ci-dessus avec de tels capteurs, il est classiquement nécessaire d'en prévoir plus de deux disposés les uns à côté des autres. Par ailleurs, de tels capteurs disposés sur les côtés du véhicule sont susceptibles de détecter, à cause de l'existence de lobes secondaires dans le diagramme de rayonnement, des objets qui ne sont pas des obstacles à la fermeture de la porte de coffre.

Il est ainsi prévu dans l'invention deux capteurs 30, 31 disposés par exemple à une même hauteur par rapport au sol 5 et de chaque côté du véhicule (figure 3) et des moyens pour apodiser la distribution de l'intensité émise par chaque capteur 30, 31 afin de modifier le diagramme de rayonnement de chacun de ces deux capteurs 30, 31. Typiquement, ces capteurs ne sont pas visibles depuis l'extérieur du véhicule lorsque la porte de coffre est fermée, contrairement au(x) radar(s) de recul.

Les moyens d'apodisation permettent de rendre les diagrammes de rayonnement asymétriques, c'est-à-dire que les lobes secondaires situés de part et d'autre de du lobe principal ont des poids distincts (cet aspect est développé de façon plus détaillée plus bas).

Plus encore, les moyens d'apodisation permettent d'orienter les diagrammes de rayonnement vers l'intérieur de la zone de détection (changement de la directivité du rayonnement).

Dans cet objectif, les moyens d'apodisation peuvent par exemple prévoir une lame d'épaisseur variable selon la largeur du capteur, ou tout autre moyen équivalent, disposé à la sortie du capteur. De manière générale, on adaptera la forme de la lame, et plus précisément l'évolution de son épaisseur selon la largeur du capteur, au résultat recherché.

Par cette modification, les diagrammes de rayonnement de chacun des deux capteurs 30, 31 sont agencés l'un par rapport à l'autre de sorte que leurs lobes se croisent, assurant ainsi l'existence d'une zone de détection entre les deux capteurs, normalement impossible à obtenir. On comprend que l'emploi d'une lame d'épaisseur variable sur un seul des capteurs peut suffire pour obtenir le résultat recherché.

De plus, cette modification vers l'intérieur du diagramme de rayonnement de chacun des deux capteurs permet en tout ou partie de s'affranchir du problème lié à l'existence de lobes secondaires, de sorte qu'aucun objet ne peut être détecté hors de la zone de détection définie ci-dessus (plus précisément définie par L, H, D1 ou D2).

Outre la question de la directivité du rayonnement en sortie des capteurs 30, 31, les moyens pour apodiser la distribution de l'intensité émise par chacun de ces capteurs 30, 31, ont également pour fonction de modifier la surface d'émission de ces capteurs ou exactement de modifier la distribution des intensités émettrices en chaque point de la surface du capteur (asymétrie).

Cette modification est effectuée en contrôlant l'émission de rayonnement de la surface émettrice point par point, par le contrôle du gain au niveau de chacun de ces points.

Ce contrôle du gain de chaque point source de l'émission du rayonnement, permet également de jouer sur l'asymétrie du diagramme de rayonnement, et si cela s'avère nécessaire, de réduire l'influence des lobes secondaires pour s'assurer qu'aucun objet ne sera détecté à l'extérieur de la zone de détection désirée. Par contrôle de gain à l'émission, il faut comprendre tout simplement un ajustement de l'amplitude du rayonnement émis. Pour mettre en oeuvre ce contrôle de gain à l'émission, il est prévu des moyens électroniques classiques, qui ne sont ainsi pas détaillés par la suite.

Un exemple de couverture de zone de détection avec les moyens de l'invention est par exemple présenté sur la figure 4, où on observe, en vue de dessus, une vue de l'arrière d'une caisse de véhicule 4 muni de deux capteurs 30, 31 disposés de chaque côté du véhicule, et les diagrammes de rayonnement respectifs (300, 301) et (310, 311) des capteurs 30, 31.

On note que les lobes secondaires 301, 311 respectivement participent à couvrir une zone non atteinte par les lobes principaux 300, 310 des capteurs 30, 31, ce qui permet une couverture complémentaire pour former la zone de détection.

La zone de détection présentée à l'appui des figures 1 à 3 est une zone adaptée lorsque la porte de coffre est ouverte entièrement ou presque. Dans ce cas, la zone de détection est profonde.

Lorsqu'on engage la fermeture de la porte de coffre 1, on comprend qu'il est nécessaire de modifier en même temps la profondeur de la zone de détection (modification de la profondeur de champ en réception des lobes), sans quoi celle-ci dépasserait la distance H et serait susceptible de détecter des objets hors de la zone de fermeture de la porte de coffre 1.

Le contrôle de la profondeur de la zone de détection est effectué en fonction de l'angle A formé entre la caisse 4 et la porte de coffre 1 du véhicule. Plus précisément, lorsque l'angle A diminue, et ainsi que la zone devant être couverte par les capteurs diminue, le volume effectif de la zone de détection est également diminué grâce au contrôle du gain de moyens électroniques de traitement des signaux reçus (non représentés). Autrement dit, on effectue donc un contrôle du gain en réception des signaux.

Ces moyens électroniques de traitement sont classiques et visent à traiter les signaux préalablement émis par les capteurs eux-mêmes.

Le contrôle de gain en réception est avantageux dans la mesure où il est possible d'adapter la profondeur de champ de la zone de détection d'obstacles sans que la porte de coffre entre dans cette zone. Avant de mettre le véhicule en service, on effectue pour cela un réglage préalable permettant de fournir une relation entre l'angle A et le gain en réception pour que la porte de coffre 1 ne soit jamais dans la zone de détection. La détection de la porte de coffre se fait donc en quelque sorte à l'avance.

Les capteurs 30, 31 sont choisis indifféremment parmi, à titre d'exemples non limitatifs, des capteurs à ultrasons, des capteurs hyperfréquence de type millimétrique ou centimétrique.

Les capteurs présentés dans le cadre de l'invention peuvent être des capteurs dédiés, montés à l'arrière du véhicule. Selon une variante déjà présentée, il peut en outre être prévu un ou plusieurs radars de recul.

Mais, si des capteurs de recul 32 sont prévus sur le véhicule, il est également tout à fait envisageable que ceux-ci jouent le rôle des capteurs 30, 31 pour lesquels sont prévus des moyens d'apodisation du diagramme de rayonnement, lorsque la porte de coffre est à l'état ouvert.

## Revendications

1. Dispositif de détection d'un obstacle à l'arrière d'un véhicule comprenant au moins un capteur (30, 31, 32) ;
le dispositif étant **caractérisé en ce qu'**il comprend des moyens pour apodiser la distribution de l'intensité émise par le ou chaque capteur (30), de manière à modifier le diagramme de rayonnement du ou de chaque capteur et de façon que les directions principales des diagrammes de rayonnement respectifs du capteur dont le diagramme de rayonnement est modifié et d'un autre capteur, se croisent à l'extérieur du véhicule pour obtenir une zone de détection;
et **en ce qu'**il comprend des moyens pour diminuer la profondeur de la zone de détection lorsqu'on engage la fermeture de la porte de coffre (1), et que l'angle (A) formé entre la caisse (4) et la porte de coffre (1) du véhicule diminue.

2. Dispositif selon la revendication 1, **caractérisé en ce qu'**il comprend des moyens pour contrôler le gain des signaux émis point par point à la surface d'au moins un des capteurs (30,31).

3. Dispositif selon la revendication 1 ou 2, **caractérisé en ce que** les moyens pour contrôler la profondeur de la zone de détection sont des moyens électroniques de traitement à gain variable des signaux reçus par les capteurs (30,31).

4. Dispositif selon l'une des revendications précédentes, **caractérisé en ce qu'**il comprend des moyens pour apodiser la distribution de l'intensité émise par deux capteurs (30, 31), de sorte que les directions principales de leurs diagrammes de rayonnement respectifs se croisent à l'extérieur du véhicule.

5. Dispositif selon l'une des revendications précédentes, **caractérisé en ce qu'**il comprend deux capteurs (30, 31) disposés de chaque côté du véhicule, sensiblement à une même hauteur par rapport au sol (5).

6. Dispositif selon l'une des revendications précédentes, **caractérisé en ce que** ledit au moins un capteur est un radar de recul (32).

7. Procédé de détection d'un obstacle à l'arrière d'un véhicule, utilisant au moins un capteur (30, 31, 32) ;
**caractérisé en ce qu'**on apodise la distribution de l'intensité émise par le ou chaque capteur (30, 31), afin de modifier le diagramme de rayonnement du ou de chaque capteur, les directions principales des diagrammes de rayonnement respectifs du capteur dont le diagramme de rayonnement est modifié et d'un autre capteur se croisant à l'extérieur du véhicule pour obtenir une zone de détection;
et **en ce qu'**on diminue la profondeur de la zone de détection lorsqu'on engage la fermeture de la porte de coffre (1), et que l'angle (A) formé entre la caisse (4) et la porte de coffre (1) du véhicule diminue.

## Claims

1. Device for detecting an obstacle at the rear of a vehicle comprising at least one sensor (30, 31, 32);
the device being **characterized in that** it comprises means for apodizing the distribution of the intensity emitted by the or each sensor (30), so as to modify the radiation pattern of the or of each sensor and in such a way that the principal directions of the respective radiation patterns of the sensor whose radiation pattern is modified and of another sensor cross one another outside the vehicle so as to obtain a detection zone;
and **in that** it comprises means for decreasing the depth of the detection zone when the closure of the boot door (1) is engaged, and the angle (A) formed between the shell (4) and the boot door (1) of the vehicle decreases.

2. Device according to Claim 1, **characterized in that** it comprises means for controlling the gain of the signals emitted point by point at the surface of at least one of the sensors (30, 31).

3. Device according to Claim 1 or 2, **characterized in that** the means for controlling the depth of the detection zone are variable-gain electronic means of processing of the signals received by the sensors (30, 31).

4. Device according to one of the preceding claims, **characterized in that** it comprises means for apodizing the distribution of the intensity emitted by two sensors (30, 31), so that the principal directions of their respective radiation patterns cross one another outside the vehicle.

5. Device according to one of the preceding claims, **characterized in that** it comprises two sensors (30, 31) disposed on each side of the vehicle, substantially at one and the same height relative to the ground (5).

6. Device according to one of the preceding claims, **characterized in that** the said at least one sensor is a reversing radar (32).

7. Method for detecting an obstacle at the rear of a vehicle, using at least one sensor (30, 31, 32);
**characterized in that** the distribution of the intensity emitted by the or each sensor (30, 31) is apodized so as to modify the radiation pattern of the or of each sensor, the principal directions of the respective radiation patterns of the sensor whose radiation pattern is modified and of another sensor crossing one another outside the vehicle so as to obtain a detection zone;
and **in that** the depth of the detection zone is decreased when the closure of the boot door (1) is engaged, and the angle (A) formed between the shell (4) and the boot door (1) of the vehicle decreases.

## Patentansprüche

1. Vorrichtung zur Erfassung eines Hindernisses hinter einem Fahrzeug, die mindestens einen Sensor (30, 31, 32) enthält;
wobei die Vorrichtung **dadurch gekennzeichnet ist, dass** sie Einrichtungen enthält, um die Verteilung der von dem oder jedem Sensor (30) emittierten Intensität zu apodisieren, um das Strahlungsdiagramm des oder jedes Sensors zu ändern, und damit die Hauptrichtungen der Strahlungsdiagramme des Sensors, dessen Strahlungsdiagramm geändert ist, und eines anderen Sensors sich außerhalb des Fahrzeugs kreuzen, um eine Erfassungszone zu erhalten;
und dass sie Einrichtungen enthält, um die Tiefe der Erfassungszone zu verringern, wenn das Schließen der Kofferraumtür (1) begonnen wird und der zwischen dem Karosserie (4) und der Kofferraumtür (1) des Fahrzeugs gebildete Winkel (A) abnimmt.

2. Vorrichtung nach Anspruch 1, **dadurch gekennzeichnet, dass** sie Einrichtungen enthält, um die Verstärkung der emittierten Signale Punkt für Punkt an der Oberfläche mindestens eines der Sensoren (30; 31) zu steuern.

3. Vorrichtung nach Anspruch 1 oder 2, **dadurch gekennzeichnet, dass** die Einrichtungen zur Steuerung der Tiefe der Erfassungszone elektronische Verarbeitungseinrichtungen mit variabler Verstärkung der von den Sensoren (30, 31) empfangenen Signale sind.

4. Vorrichtung nach einem der vorhergehenden Ansprüche, **dadurch gekennzeichnet, dass** sie Einrichtungen enthält, um die Verteilung der von zwei Sensoren (30, 31) emittierten Intensität zu apodisieren, damit die Hauptrichtungen ihrer Strahlungsdiagramme sich außerhalb des Fahrzeugs kreuzen.

5. Vorrichtung nach einem der vorhergehenden Ansprüche, **dadurch gekennzeichnet, dass** sie zwei Sensoren (30, 31) enthält, die auf jeder Seite des Fahrzeugs im Wesentlichen auf gleicher Höhe bezüglich des Bodens (5) angeordnet sind.

6. Vorrichtung nach einem der vorhergehenden Ansprüche, **dadurch gekennzeichnet, dass** der mindestens eine Sensor eine Einparkhilfe (32) ist.

7. Verfahren zur Erfassung eines Hindernisses hinter einem Fahrzeug, das mindestens einen Sensor (30, 31, 32) verwendet;
**dadurch gekennzeichnet, dass** die Verteilung der von dem oder jedem Sensor (30, 31) emittierten Intensität apodisiert wird, um das Strahlungsdiagramm des oder jedes Sensors zu ändern, wobei die Hauptrichtungen der Strahlungsdiagramme des Sensors, dessen Strahlungsdiagramme geändert ist, und eines anderen Sensors sich außerhalb des Fahrzeugs kreuzen, um eine Erfassungszone zu erhalten;
und dass die Tiefe der Erfassungszone verringert wird, wenn das Schließen der Kofferraumtür (1) begonnen wird und der zwischen der Karosserie (4) und der Kofferraumtür (1) des Fahrzeugs gebildete Winkel (A) abnimmt.
